# EUROPEAN PATENT SPECIFICATION

(11) **EP 1 839 808 B1**
(45) Date of publication and mention of the grant of the patent: **06.01.2010**
(21) Application number: 07105062.9
(22) Date of filing: 27.03.2007
(51) Int. Cl.: B23Q 17/22, B23Q 15/18, G05B 19/404

(54) **Method for determining and compensating deformation in complex structures of numerically controlled machine tools and composite optic sensor system**
Verfahren zur Bestimmung und Kompensation von Deformationen bei komplexen Strukturen numerisch gesteuerter Werkzeugmaschinen und optisches Verbundsensorsystem
Procédé pour déterminer et compenser la déformation dans des structures complexes pour machines-outils commandées numériquement et système de capteur optique composite

(30) Priority: 28.03.2006 IT MO20060104
(43) Date of publication of application: 03.10.2007
(73) Proprietor: PAMA S.P.A., 38068 Rovereto (TN) (IT)
(72) Inventor: Bosetti, Paolo, 38100 Trento (IT); Nainer, Alberto, 38100 Trento (IT)
(74) Representative: Crugnola, Pietro

(56) References cited:
- EP-A1- 0 493 616
- JP-A- 61 226 246

## Description

The present invention relates to a method for determining the deformation state of complex structures in numeric control operating machines, as well as to a system of optical-fiber sensors coupled with a bi-dimensional reticular measure structure exhibiting a negligible stiffness. Said reticular measure structure is made integral, as a single body, with the complex structure of the operating machine. In the following description and in the claims, the term operating machine indicates any type of machine tool, preferably a numeric control machine tool and of large sizes.

In the last years, a continuous progress of the accurate methodologies and capability of survey and elaboration especially in the field of the deformations has been caused by the rising technological development and the need of a more precise and accurate analysis of the stresses in forefront fields, particularly in the work centers such as numeric control (CNC) machine tools.

In the field of the determination of the stress state and the consequent deformation state, only in particular cases the analytic methods enable to find the exact solutions. Approximate solutions can be found for some simple structural configurations, but, generally, for complex structures the analytic methods can't be used and one has to resort to new acquisition and elaboration methods for targeted and precise interventions on the operative parts. These last methods are those that, at the present time, appear more general and more useful for determining the overall state of the stresses and the consequent deformations.

By the way they are very well suitable for replacing a large part of the old methodologies of the particular solutions with a strongly innovative approach, both in the cases of static analysis and, particularly, in the cases of dynamic analysis. From the prior art it is known that in the field of the experimental determination of the stresses and the consequent deformations the method of larger practical use is that based on the use of the electrical strain gauges.

In some particular cases also other methods show themselves useful, such as for example the photoelastic method, or detector devices, or position sensors.

In the comparison of the operative results with the experimental results it is essential to consider what are the intrinsic characteristics of the used instruments in relation to the stress field under test and the approximations introduced during the numerical and experimental valuation. It is further useful to remember that in many cases of practical interest, both the numerical methods and the experimental methods of known art are only in part capable of providing the overall deformation state to which the complex structure is subject in the various parts thereof.

More and more large attention, thus, is paid to strictly engineering methodologies that, starting from prescribed ambient and loading conditions of static and dynamic type or inertial forces and with certain constraints, enable to determine, elaborate and compensate the deformation state in complex structures in operating machines, particularly numeric control machine tools of wide industrial interest, such as boring machines of considerable sizes. From the prior art and for the skilled persons it is known that the positioning precision of large machine tools for milling and boring with positioning variations of tools or parts of the same machine tools, like the boring bar or the tool-holder chuck or the slides, that are moved for several meters, is remarkably influenced by structural deformations.

The deformations caused by the thermal state, the long-lasting deformation of the machine bed and the same process of tool working, cause structural deformations in the machine body, that depend on the time, and are difficult to model, to forecast and to fix in advance. From the prior art it is known that in large machine tools, where remarkable powers are installed, heat originates and develops in the parts in motion and, thus, noticeable variations of temperatures arise during the operation of the same parts in operative motion. All this involves thermal expansions of various parts of the machine tool and consequently stretchings and structural deformations hardly detectable and manageable in order to act for the compensation thereof. In addition, it is known that the increase of the positioning precision of the tools in numeric control - CNC - machines is of great industrial interest, particularly in the case of large milling and boring machines. In fact, geometrical errors and thermal structural deformations are particularly harmful when the movement of the tool on linear axes is in the order of five meters and over, because said geometrical errors and thermal structural deformations reflect on the overall positioning precision, that is rarely lower than 0,1 mm. (a tenth of millimeter).

Furthermore, it is known the use of a machine tool having position sensors of known art, the measures thereof are elaborated by means of an algorithm loaded in the numeric control - CNC - of the same machine tool to determine the correction of the positioning height, said correction compensating the thermal-structural deformations of the devices, or the operative parts.

By the way, how it is well known to the technicians of the field, the two main sources of errors can be described as:
- geometrical errors, which may be expressed as shape error and which may be considered as independent of the time with respect to the duration of the working cycle;
- thermal-structural deformations which are effects of thermal, structural and inertial loads acting on the machine structure and being intrinsically dependent on the time.

With reference to such technical field relevant to the working precision in large machine tools, the technicians of the field know that the problem is in the thermal-structural deformations, i.e. in the measurement and the compensation of the errors dependent on the time.

Various tactics proposed from the prior art and partly mentioned above have recently led to improvements in the field of the overall precision of the mechanical workings on the machine tools, but said tactics don't ensure workings involving a precision of the order of the hundredth of millimeter, that is found to be the precision value even more required in the practical embodiment of the workings in large milling and boring machines.

Furthermore, the tactics proposed from the known prior art, in order to satisfy the required increase of the positioning precision of the tools and, thus, the overall positioning precision of the various parts of the machine, resulted not perfectly effective because said tactics give rise, in fact, to rather often precarious overall working precisions and to not always repeatable results of workings within the limits of the prefixed precision values in the practical embodiment.

It is known from EP-A1-0 493 616 a system for determining configuration of deformation in a structure, more or less complex, of an operating machine, which is used for correcting and controlling the positions of various industrial machines. The amount of displacement of the structure in the axial direction is detected by laser length measuring machines, and in accordance with the amount of displacement, a heater is operated or cooling water is supplied.

Object of the present invention is that to eliminate the above-mentioned drawbacks by devising a method and a reticular structure of measure for a deformation composite direct sensor - SDD -, said method and structure giving rise to a faultless result of high positioning precision of the tools and secure reliance in the traceability on the overall positioning position consisting essentially in the necessity to obtain a precision substantially of the order of the hundredth of millimeter (0,01 mm) on the workings of surfaces of mechanical pieces of any size.

These and yet other objects are all reached through the method of the present invention as defined by appended claim 1.

According to an embodiment the method enables the deformation of the structure of the machine tool to be acquired by interpolation of the positions assumed by the knots after the deformation of the reticular structure of measure exhibiting itself like a set of elements, or rods disposed so as to form a bi-dimensional structure, wherein every rod is provided with a deformation sensor along the axial direction and the longitudinal deformations of the sensors-rod are used to reconstruct, by triangulations, the displacement on the plane of the knot-sensors that are rigidly fixed to the underlying structure of the machine tool.

According to a further embodiment the method exhibits at least two bi-dimensional reticular structures of measure, each being rigidly fixed by own knot-hinges to different planes, or to cartesian planes of the underlying machine structure to be monitored for the detection of the deformation on time scale.

According to a further embodiment the method exhibits the rods of the reticular structure of measure equipped with at least an optical-fiber deformation sensor, including at least a Bragg's grating - FBG - for allowing the detection and the measurement of deformations on the machine tool structures given by dynamic phenomena and structural loads that depend on time.

According to a further embodiment the method enables to measure, by the Bragg's grating- FBG - optical-fiber sensors, the deformation values not including any deviation in the detected values, allowing a direct comparison between the instant deformation levels and the reference levels, after a long period of time and after repeated operative suspensions.

The reticular structure of measure with several composite sensors for the practical embodiment of the method of the present invention comprises:
- a system of straight rods mono-axially loaded and arranged so as to form a bi-dimensional reticular structure;
- composite sensors detecting deformations, said sensors being associated and assembled along the axial direction of each rod of the reticular structure of measure;
- knot-hinges each being formed by the confluence of several rods and each being rigidly constrained to the underlying structure of the machine tool.

According to an embodiment the reticular structure of measure of the present invention includes that each rod is pre-tensioned by means of fastening nuts, or similar elements, positioned in the knot-hinges of the reticular structure. According to a further embodiment the reticular structure of measure of the present invention includes that the rods meeting in the knot-hinges exhibit substantially curvilinear profiles so as to fit to the curved contours of the structure of the machine tool to be monitored for the detection of the overall deformation.

According to a further embodiment the reticular structure of measure of the present invention includes that the composite sensors detecting deformations are sensors having optical fibers, said optical fibers being integrated with at least a Bragg's grating advantageously subjected to the doping of the Germanium crystalline element, or compounds from the germanium itself.

According to a further embodiment the reticular structure of measure of the present invention includes that the optical fibers integrated with the Bragg's gratings are sufficiently pre-tensioned in the anchorage on the bearing rods of the same reticular structure of measure.

According to a further embodiment the reticular structure of measure of the present invention exhibits at least two sensors having optical fibers integrated with the Bragg's gratings, said two sensors being mounted free at the two ends of the structure of the machine tool for monitoring and compensating the deformations originated by the temperature variations.

According to a further embodiment the reticular structure of measure of the present invention exhibits, for each cartesian plane relating to one of the three cartesian axes of the structure of the machine tool to be monitored for the detection of the deformations, at least a system of straight and/or curvilinear rods having bi-dimensional reticular structure, said rods being associated with the composite optical-fiber sensors and the knot-hinges, said knot-hinges being formed by the confluence of the same rods and rigidly constrained to the underlying structure in the temporal detection of the deformations.

The invention will be described in more details here below with reference to the embodiment schematically shown in the enclosed drawing tables, disclosing in summary the features of the invention, all the enclosed drawings, thus also the description thereof that will be made, corresponding to a preferred embodiment for making more understandable the way of actuation thereof, but the possible variations of reciprocal positions of the elements are comprised in the required protection as well as the consequent simplifications, which could derive therefrom and all the constructional variants included in the general idea, which is explained in the enclosed drawings in which:
- Figure 1 is a schematic view in axonometric perspective of bearing structures of a machine tool and in particular a longitudinal slide and a vertical boring chuck-holder mast with boring bar, said view showing, also, the bi-dimensional reticular structures of measure advantageously constrained to the underlying structures to be monitored belonging to the machine tool preferably a boring machine with very bulky frameworks;

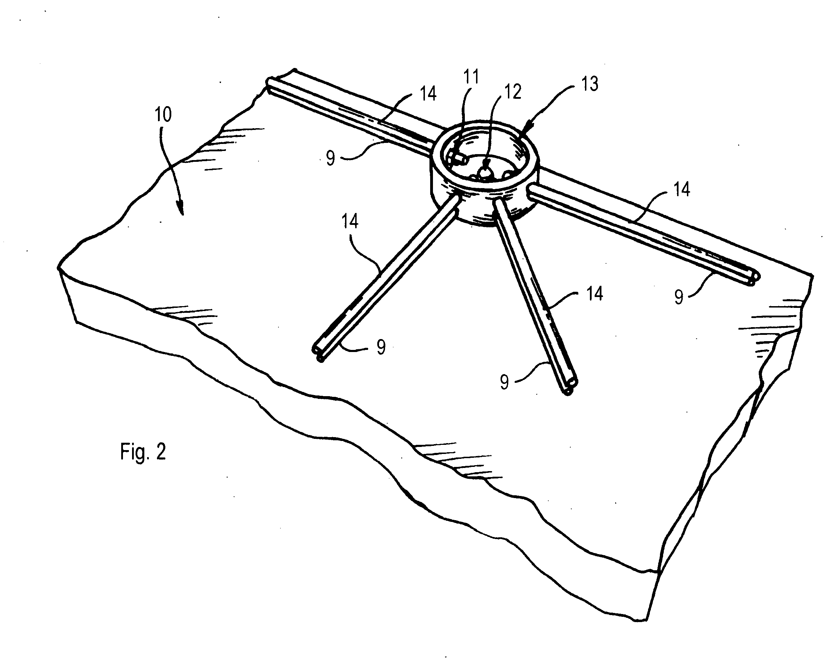

- Figure 2 is a schematic view in axonometric perspective of a knot-hinge on which several rods of the reticular structure of measure meet, said rods being assembled and constrained to the knots-hinge by means of fastening nuts or similar connection elements, said view showing, also, the stiff anchorage between the knot-hinge and the plane of the underlying structure to be monitored belonging to the machine tool preferably a numeric control boring machine;
- Figure 3 is a schematic view of the bi-dimensional reticular structure of measure in an unstressed configuration and, thus in unloaded condition 16;
- Figure 4 is a schematic view of the bi-dimensional reticular structure of measure in a stressed configuration 16a with a load 15 applied to a point of the structure.

In the figures corresponding parts, or parts having equal functions, are provided with identical reference characters for simplicity. In the figures, as well, for the overall clarity, the mechanisms, the tools, the piece to be worked, the slides and the frameworks, constituting in reciprocal cooperation the boring machine tool, and the operation thereof is not illustrated because it is yet known, and also because they are not necessary for the comprehension of the working of the present invention. Thus, for example, the actuating motorizations of the chuck, the advancing slides, the various tables and the various masts are not represented, and thus, also, the circuit details of the drive unit of the numeric control - CNC - all of known art are not represented and described.

In the enclosed tables:
- 1 is a longitudinal slide for allowing a horizontal translation of the bearing structure 2, supporting the vertical mast 5 of the chuck 4 and the boring bar 3; 6 and 7 are reticular structures of measure constrained to and positioned on the vertical planes orthogonal to each other of the chuck-holder 4 and mast 5; 8 is a reticular structure of measure horizontally constrained along the longitudinal side of the slide 1; 10 is the generic plane of structure of the machine tool to be monitored, on said plane 10 being rigidly constrained, by means of the mechanical fastening element 12 the knot-hinge 13 that is formed by the confluence of several rods 14, said rods 14 being substantially straight and sufficiently mono-axially tensioned by the nuts 11.

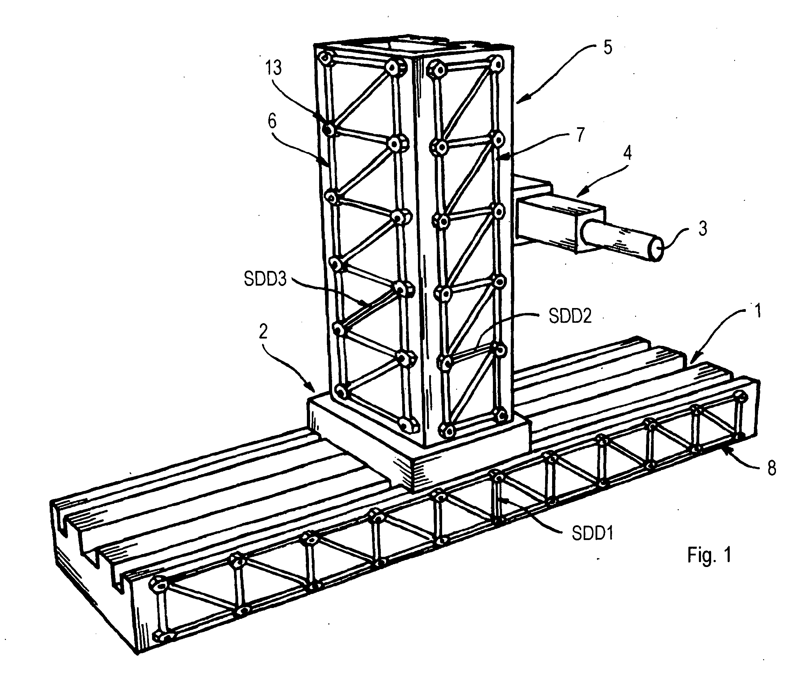

Said rods 14 are arranged so as to form the reticular structure of measure 6 or 7 or 8; 9 is the composed deformation sensor associated along the axial direction of each rod 14 of the said bi-dimensional reticular structures 6, 7 and 8 of Figure 1. By the way, the composite deformation detection sensors 9 are advantageously associated along the axial direction of each rod 14 of the bi-dimensional reticular structure of measure, on said straight and/or substantially curvilinear rods 14 the composite sensors 9 being slightly pre-tensioned in the anchorage to the same rods 14. The composite deformation detection sensors 9 are sensors having optical fibers integrated with at least a Bragg's grating preferably subjected to the doping of the crystalline element of germanium, or compounds of same germanium of known art. The optical fibers, in fact, establish themselves in the last years as information vectors highly effective from the point of view of the transmission velocity, the duration, the long term reliability and the reduced signal dispersion. The information transits through the optical fiber in the form of light ray, that is transmitted even to a relevant distance owing to multiple reflections occurring inside the fiber. By inserting in the fiber, as it is well known, some passive optic elements having known behavior the light ray in transit may be modulated in a way coherent to the axial deformation of the fiber at the same optic element. Depending on the optic element used, the modulation may be more sensitive to the deformation, or may follows with higher quickness the deformation with time, or again may be sensitive to the vibrations. As far as the applicant is concerned, after long experimentations, the chosen optic element is the Bragg's grating "written" on optical fiber and typically doped with germanium or compounds of the same germanium- FBG (Fibre Bragg Gratings). When the grating is subjected to deformations or temperature variation, the period of the same grating varies. This causes the variation of the reflected wavelength, and said variation causes ultimately the displacement of the characteristic wavelength of the grating. Such known mechanism enables the direct measurement of deformation and temperature. Along a fiber, as optic guide, several Bragg's gratings may be inserted, so as to measure the axial deformation of the fiber in several points. Clearly the optical fiber 9 may advantageously be wrapped around the rod 14 for a length suitable to the needs of position of the Bragg's gratings as it is well known to those skilled in the art. Thus also it is known that the optical fibres 9 are almost always glued to the rods 14 acting as sensor bearings. As far as the limits of use are concerned, the optical fibers 9 may support deformations of 2% (two per cent) and just for this reason they are usually subjected to a 1% (one per cent) pretension when they are glued on the bearing of the rod 14. The applicant in the long experimentation for establishing the subject innovation has noted that since the grating constant varies as the temperature varies, some optical fibers having reference Bragg's gratings must be included, i.e. optical fibers which are not tensioned and left free so as to detect only the variations of the grating constant due to variations of temperature of the fiber 9 itself. The composite sensor 9 with the rods 14 is defined Direct Deformation Sensor - SDD - (Direct Deformation Sensor) enabling to measure the deformation of the main structural components of a milling machine tool, or three cartesian axes boring, like that shown in Figure 1.

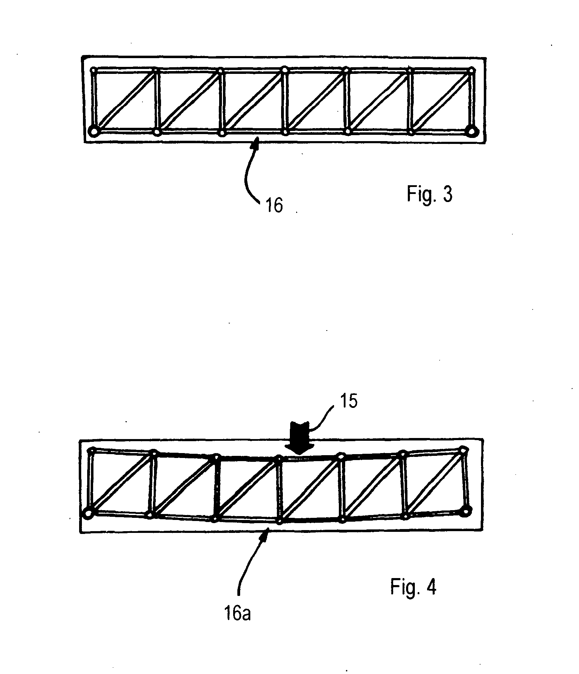

From the point of view of the performance, the novelty of the proposed solution is the high operative frequency of the composite sensor 9 (of about 1000 Hz), enabling a measurement of the deformations on a time scale compatible with the tool working process. The composite sensor - SDD - is realized with a system of monitored rods 14, arranged as to form a bi-dimensional structure, in which system each rod 14 is provided with a deformation sensor 9 along the axial direction of the rods 14 themselves. When the reticular structure 16 is constrained, knot by knot 13, to a structural component of a machine tool of large sizes, the longitudinal deformation of every sensor-rod 9-14 may be used for reconstructing, by triangulation, the displacement on the plane 10 of every knot 13. Until the knot-hinges 13 are rigidly fixed to the underlying structure, the deformation of the structure 5, or the structure 1, may be obtained, by interpolation, from the position assumed by the knot-hinges 13 after the deformation. For example, the three sensors SDD1, SDD2 and SDD3 schematically shown in figure 1 may be used for measuring the deformation of the bench structure 1 (SDD1) and the structure of the vertical mast 5 at the two vertical orthogonal planes (SDD2 and SDD3). The potential of the simple concept hereinbefore expressed in the prediction of the error and in the compensation becomes also more interesting if the rods 14 are equipped with optic FBG deformation sensors (Fiber-optic Bragg Gratings FBG, of known art: "Y-J RAO, in fibre bragg grating sensor" Meas Sci Technol, vol. 8 pp. 335-375, 1997). Actually, in addition to the resolution and precision levels suitable for the use, the FBG sensors 9 are particularly interesting because they have a nominal dynamic range from DC to 250 Hz and over, enabling the detection and the measurement of structural deformations developing both in long times (like the thermal deformations) and in shorter times (like the deformations caused by dynamic phenomena and structural loads). In addition even more important for the use experimented by the applicant, the FBG sensors don't show any deviation in the measured deformation values, allowing a direct comparison between the instant deformation levels and reference levels, also after a long period of time and after repeated suspensions. The applicant of the present invention has developed in the experimentation a finite element model of a simplified longitudinal slide seating 1 of a machine tool, said machine tool being loaded with thermal and structural loads, in order to verify the viability in the field of the precision of the composite sensor 9. The intensity of the loads has been determined so as to obtain displacements comparable with those usually present on large milling and boring machine tools. The "output" signals of a composite optic sensor - SDD - having a reticular structure of measure 16 of figure 3 of about twelve knot-hinges 13 have been derived by interpolation of the displacements of the finite element solution of a machine tool in each position of a SDD composite sensor.

Leaving aside the equations and the systems of two or more equations and the expressions made explicit amongst the different quantities for shortness of exposition the results prove that the resolution of the FBG sensors on the deformations is sufficient to accurately measure deformations of the same entity of those usually present in large milling and boring machines.

On the basis of the good results obtained by the applicant with the finite element model, a sensor prototype has been realized in order to verify the effect of the project from the performances of the SDD composite sensor. For example, according what has been said now, it is considered that the reticular structure of measure 16 having several sensors 9 is composed of ideal knot-hinges (through which the moments are not transmitted) and mono-axially pre-tensioned rods 14 having ideal linear behavior. Actually, only under this hypothesis, the assumption that the length of the i-th rod 14 is linearly bonded to the deformation measured by its sensor 9 detecting the axial deformation may be maintained.

The prototype model tested by the applicant is, precisely, a truss structure having the direct deformation sensor (SDD), said truss structure being formed by a set of cylindrical rods 14 attached through the knot-hinges 13 to a lateral face of the bench structure 1. Every rod 14 has a FBG sensor glued for half of its length, and the rod 14 is pre-tensioned by the fastening nuts 11, so that load inversions can't be present which would determine measurement errors. Two additional free FBG sensors mounted at the two ends of the structure are used for the temperature compensations of the monitored machine structure. The set of FBG sensors constituting with the reticular structure of measure the direct deformation sensor - SDD - has been connected with WDM interrogators (Micronoptics SI 425, multiplexing frequency 250 Hz), which have communicated the data on the deformations to a personal computer via TCP/IP protocol. Furthermore a specialized software has been developed enabling the computation and the visualization of the amplified deformed structure (see figure 4) in real-time. The relationship, further, between the load applied to the prototype and the deformation values result to be linear. The tested prototype is thus suitable to describe the deformation of the connected structure with a precision of about a micron, which exceeds the precision typical of large numeric control - CNC - machine tools.

The composite sensor - SDD - (direct deformation sensor), or reticular structure of measure having FBG sensors, of known art, in the development of the actuated experimentation has confirmed the following aspects:
- static long term behavior: the FBG deformation sensors 9 don't show displacements (drift) of the signal and don't require any recalibration after the switch-offs of the machine. In consequence the SDD provides a deformation measure of the connected structure with respect to a reference state, which may be possibly the machine state at the installation. The long term precision and the repeatability of the measures obtained by the SDD have been tested by the applicant during the experimentation phase;
- dynamic behavior: the relatively high frequency of the signal of the FBG sensors 9 suggests the possibility of use the SDD output as compensation signal also during the operations performed by the machine tool. For example, the deformations of the column 5 caused by the loads generated during working and by the inertial loads during the maximum percentage feed movement may be possibly compensated with a suitable handling of the seating 1. The numeric control - CNC - will be programmed for compensating the horizontal position of the seating 1 with the horizontal deviation, calculated by the SDD composite sensor, of a reference point taken on the column 5. The positioning error of the reference point on the column 5 will be then measured by means of a doppler laser vibrometer, in different test conditions. For example with a deformation of the column 5 imposed as a result of internal loads, thermal gradients, or inertial loads. By the way this aspect has been studied in depth during the experimentation using the vertical column 5 above the seating 1 of a horizontal linear axis;
- tridimensional deformation: owing to the composite sensor - SDD - the deformations on a plane of the monitored machine structure can be accurately measured; more complex deformations need more composite sensors - SDD - like tridimensional reticular structures of measures, as it is schematically shown in figure 1 (SDD1, SDD2, SDD3). This last embodiment is the most demanding in the detection and the elaboration of the configurations of structural deformed profiles developing both in short times and in long times;
- integration with the numeric control - CNC - supervising the operations of the machine tool: different experimental embodiments for the integration of the output of the SDD composite sensor with the CNC unit of the boring machine have been studied and verified with positive results of remarkable practical interest. For example the signal generated by the SDD composite sensor, taking into consideration the effective dynamic abilities of the SDD connected to the structures of a machine tool, is subjected to a filtration group, of known art, and then not shown and not described, suitable to compensate the deformations without causing instability to the control loop (loop) of the numeric control - CNC - unit. All that has been above described above lead the applicant to intuit and experiment a new and innovative composite sensor having a reticular structure of measure having optical fibres
- FBG -, called SDD (direct deformation sensor), for the active compensation, in real-time, of the errors deriving from the deformation of structural parts in large numeric control - CNC - machine tools particularly milling and boring machines. Although various different techniques of equipment have been experimented and proposed for measuring and compensating the positioning error, the sensors 9 proposed by the applicant show the following peculiar characteristics:
- the SDD, or bi-dimensional reticular structure of measure having several FBG optical sensors, provides a real-time and instant measurement of the deformation of the connected machine structure, i.e. provides the deformed position of any point by interpolation of the deformed position of the knot-hinges 13 of the SDD;
- the deformation sensors constituting the composite sensor - SDD - are Bragg Gratings - FBG - optical fibres 9 (Fiber-optic Bragg Gratings), related and questioned by a Wavelenght-Division--Multiplexing spectrometer, that provides a measurement of deformation levels in the various planes of the machine structure, and said SDD sensor doesn't suffer neither from deviations nor from slides on time scale also very long, and easily compensates the effects of the working temperatures of the boring machine and the milling machine, or of any other machine tools of large sizes.

Ultimately according to what has been exposed above the project of an innovative composite sensor applied to CNC machine tools, and the results of the experimental tests made for the purpose of estimating the precision of the SDD composite sensor, results to be in the order of a micron in the measuring the deviation of the rod reticular structure 8, or 7, or 6 connected with the knot-hinges 13 to the planes 10 of machine tool on spans of some meters.

Obviously, the invention, here proposed through an original solution, is not limited to the only constructive embodiment of this bi-dimensional reticular structure of measure associated with specific optical fibers, which has been described above by way of example; the invention, on the contrary includes all the variations thereof as defined by the appended claims.

## Claims

1. A method for determining a configuration of deformation in a given structure, more or less complex, of **a numeric control** operating machine, **characterized by**:
- acquiring the deformation of the structure of the operating machine by detecting the deformation of a reticular structure **(16)** of measure formed by any number of rods **(14)** connected to each other, that are straight and have a negligible stiffness, said reticular structure **(16)** of measure being constrained as a single body at its nodal points to the structure of the operating machine;
- measuring substantially in continuous the thermal-structural deformations of the monitored structures of the operating machine by means of a system of optical-fiber sensors **(9),** acting as vectors of information and that are coupled to the rods **(14)** connected to each other to form the reticular structure of measure;
- detecting the deformations of the monitored structures of the operating machine at a high execution frequency originated by the optical-fiber sensors **(9),** enabling to make measurements of the deformations on a time scale compatible and comparable with the drive frequencies of the execution phases of the tool working process in numeric control - CNC - operating machines;
- modeling and elaborating the overall state of deformations for performing, instant by instant, at high frequency, the corrections and compensations in **a** drive unit that drives by correcting the positioning points of the tools in the working processes in numeric control operating machines;
- integrating the signals generated by the system of the optical-fibre sensors **(9)** through a filtration unit suitable to compensate the **deformations** without causing instability to the functional **control** loop of numeric control the operating machine;
- providing a real-time measurement of the deformed position of any point of the complex monitored structure by interpolating the deformed positions of knots of the optical-fibre sensors **(9)** coincident with the knots **(13)** of the connected elements of the reticular structure of measure;
- measuring the overall deformation levels devoid of deviations on a time scale and compensated for the effects of the working temperatures of the monitored structures of the operating machine.

2. Method for determining the deformation of a structure of operating machine according to claim 1, **characterized by** acquiring the deformation of the structure of the operating machine by interpolation of the positions assumed by the knots **(13)** after the deformation of the reticular structure of measure exhibiting itself like a set of elements, or of monitored rods **(14)** arranged so as to form a bi-dimensional structure, wherein each rod **(14)** is provided with an **optical-fibre** sensor **(9)** along the axial direction and the longitudinal deformations of the rods **provided with sensors** are used for reconstructing, by triangulations, the displacement on the plane of the sensor-knots which are rigidly fixed to the underlying structure of the machine tool.

3. Method for determining the deformation of a structure of operating machine according to claims 1 and 2, **characterized by** exhibiting at least two bi-dimensional reticular structures of measure, each rigidly fixed with own knot-hinges to different planes **(10)** of the underlying structure to be monitored for the detection of the deformations on time scale.

4. Method for determining the deformation of a structure of operating machine according to claim 3, **characterized in that** the bi-dimensional reticular structures of measure are rigidly fixed with own knot-hinges **(13)** to substantially orthogonal cartesian planes **(10)** of the underlying structure to be monitored for the detection of the deformations on time scale.

5. Method for determining the deformation of a structure of operating machine according to claims 1 and 2, **characterized by** exhibiting the rods **(14)** of the reticular structure of measure equipped with at least an optical-fiber deformation sensor **(9)** including at least a Bragg's grating (FBG) for allowing the detection and the measurement of structural deformations developing both in long times, like the thermal deformations**,** and in shorter times, like deformations given by dynamic phenomena and structural loads.

6. Method for determining the deformation of a structure of operating machine according to one or more of the preceding claims **characterized by** measuring by optical-fiber sensors **(9)** having a Bragg's grating - FBG - the deformation values that don't show any deviations in the detected values, allowing a direct comparison between instant deformation levels and reference levels, also after a long period of time and after repeated operative suspensions.

7. **Machine tool comprising a** reticular structure of measure having several composite sensors, **said reticular structure** comprising:
- a system of straight rods (14) connected to each other mono-axially loaded, having a negligible stiffness and arranged so as to form a bi-dimensional reticular structure (16) of measure being constrained as a single body at its nodal points to the structure of the operating machine
- optical-fiber sensors (9) associated along the axial direction of each rod (14) of the said bi-dimensional reticular structure (16);
- knot-hinges (13) each formed by the confluence of several rods (14) and each rigidly constrained to the underlying structure to be monitored belonging to the machine tool preferably of relevant size.
- a filtration unit suitable to compensate the deformations of the structure of the operating machine.

8. **Machine tool** according to claim 7, **characterized in that** each rod (14) is pre-tensioned by means of fastening nuts (11) positioned in the knot-hinges (13) of the reticular structure.

9. **Machine tool** according to claims 7 and 8,
**characterized in that** the rods (14) meeting in the knot-hinges (13) exhibit substantially curvilinear profile for fitting to the curved contours of the structure of the machine tool to be monitored in the detection of the deformation.

10. **Machined tool** according to claim 7, **characterized in that** the composite deformation sensors (9) are sensors having optical fibers integrated by at least a Bragg's grating advantageously subjected to the doping of the germanium crystalline element, or compounds of the same germanium.

11. **Machine tool** according to claim 10, **characterized in that** the optical fibres integrated with the Bragg's gratings are slightly pre-tensioned in the anchorage on the bearing rods (14) of the reticular structure of measure.

12. **Machine tool** according to one or more of the claims **7 to 11, characterized by** exhibiting at least two sensors having optical fibres integrated with the Bragg's gratings mounted free at the two ends of the structure of machine tool for monitoring and compensating **the errors deriving from** the deformations originated by the temperature variations.

13. **Machine tool** according to one or more of the claims **7 to 12**, **characterized by** exhibiting, for each cartesian plane relating to one of the three cartesian axes of the structure of the machine to be monitored for the detection of the structural deformations, at least a system of rods having bi-dimensional reticular structure, said rods being associated with the composite optical-fibre sensors (9) and the knot-hinges (13) formed by the confluence of the same rods (14) and rigidly constrained to the underlying structure in the detection of the deformations.

14. Machine tool **according to claims 7 to 13, characterized by being** a numeric control milling and boring machine tool equipped with at least a reticular structure of measure having several rods (14) and several composite optical-fibre sensors **(9)**.

## Patentansprüche

1. Verfahren zur Ermittlung einer Deformationskonfiguration bei einer gegebenen, mehr oder weniger komplexen Struktur einer numerisch gesteuerten Arbeitsmaschine, **gekennzeichnet durch**:
- Erfassen der Deformation der Struktur der Arbeitsmaschine **durch** Erkennen der Deformation einer netzartigen Messstruktur (16), die **durch** eine beliebige Anzahl miteinander verbundener Stäbe (14) gebildet ist, die gerade sind und eine vernachlässigbare Steifigkeit aufweisen, wobei die netzartige Messstruktur (16) als Einzelkörper an ihren Knotenpunkten an der Struktur der Arbeitsmaschine festgelegt ist;
- im Wesentlichen kontinuierliches Messen der thermisch-strukturellen Deformationen der überwachten Strukturen der Arbeitsmaschine mittels eines Systems von Lichtleitersensoren (9), die als Informationsvektoren wirken und mit den miteinander verbundenen Stäben (14) gekoppelt sind, um die netzartige Messstruktur zu bilden;
- Erkennen der Deformationen der überwachten Strukturen der Arbeitsmaschine bei einer hohen Ausführungsfrequenz, die **durch** die Lichtleitersensoren (9) hervorgebracht ist, um es zu ermöglichen, Messungen der Deformationen in einem Zeitmaßstab durchzuführen, der mit den Antriebsfrequenzen der Anwendungsphasen des Werkzeugarbeitsprozesses bei numerisch gesteuerten - CNC - Arbeitsmaschinen kompatibel und vergleichbar ist;
- Modellieren und Ausarbeiten des Gesamtzustands der Deformationen, um jederzeit bei hoher Frequenz die Korrekturen und Kompensationen einer Antriebseinheit durchzuführen, indem die Positionierpunkte der Werkzeuge bei den Arbeitsprozessen bei numerisch gesteuerten Arbeitsmaschinen korrigiert werden;
- Integration der **durch** das System der Lichtleitersensoren (9) erzeugten Signale mittels einer Filtereinheit, die dazu ausgebildet ist, die Deformationen zu kompensieren, ohne Instabilitäten bei dem funktionellen Regelkreis der numerisch gesteuerten Arbeitsmaschine zu verursachen;
- Erbringen einer Echtzeitmessung der deformierten Position jedes Punktes der komplexen überwachten Struktur **durch** Interpolation der deformierten Positionen von Knoten der Lichtleitersensoren (9), die mit den Knoten (13) der verbundenen Elemente der netzartigen Messstruktur zusammenfallen;
- Messen des Gesamtdeformationsniveaus, das frei von Abweichungen im Zeitmaßstab und hinsichtlich der Auswirkungen der Arbeitstemperaturen der überwachten Strukturen der Arbeitsmaschine kompensiert ist.

2. Verfahren zur Ermittlung der Deformation einer Arbeitsmaschinenstruktur gemäß Anspruch 1, **gekennzeichnet durch** Erfassung der Deformation der Struktur der Arbeitsmaschine **durch** Interpolation der von den Knoten (13) eingenommenen Positionen nach der Deformation der netzartigen Messstruktur, die sich als ein Satz von Elementen, oder von überwachten Stäben (14) betrachten lässt, die angeordnet sind, um eine zweidimensionale Struktur zu bilden, wobei jeder Stab (14) entlang der axialen Richtung mit einem Lichtleitersensor (9) versehen ist, und wobei die Längsdeformationen der mit Sensoren versehenen Stäben mittels Triangulation genutzt werden, um die Auslenkung auf der Fläche der Sensorknoten, die an der zugrundeliegenden Struktur der Werkzeugmaschine starr befestigt sind, zu rekonstruieren.

3. Verfahren zur Ermittlung der Deformation einer Arbeitsmaschinenstruktur gemäß den Ansprüchen 1 und 2, **gekennzeichnet durch** Aufbieten mindestens zweier zweidimensionaler netzartiger Messstrukturen, die jeweils mit eigenen Knotengelenken starr an verschiedenen Flächen (10) der zugrundeliegenden Struktur befestigt sind, um zur Erkennung der Deformationen im Zeitmaßstab überwacht zu werden.

4. Verfahren zur Ermittlung der Deformation einer Arbeitsmaschinenstruktur gemäß Anspruch 3, **dadurch gekennzeichnet, dass** die zweidimensionalen netzartigen Messstrukturen mit eigenen Knotengelenken (13) an im Wesentlichen orthogonalen kartesischen Flächen (10) der zugrundeliegenden Struktur starr befestigt sind, um zur Ermittlung der Deformationen im Zeitmaßstab überwacht zu werden.

5. Verfahren zur Ermittlung der Deformation einer Arbeitsmaschinenstruktur gemäß den Ansprüchen 1 und 2, **gekennzeichnet durch** Aufbieten der Stäbe (14) der netzartigen Messstruktur, die mit mindestens einem Lichtleiterdeformationssensor (9) ausgestattet sind, der zumindest ein Bragg-Gitter (FBG) umfasst, um die Erkennung und Messung von strukturellen Deformationen zu erlauben, die sowohl in langen Zeiten, wie die thermischen Deformationen, als auch in kurzen Zeiten, wie die **durch** dynamische Phänomene und strukturelle Belastungen gegebenen Deformationen, auftreten.

6. Verfahren zur Ermittlung der Deformation einer Arbeitsmaschinenstruktur nach einem oder mehreren der vorhergehenden Ansprüche, **gekennzeichnet durch** ein Messen mittels Lichtleitersensoren (9), die ein Bragg-Gitter - FBG - aufweisen, wobei die Deformationswerte, die keine Abweichung bei den erfassten Werten zeigen, einen direkten Vergleich zwischen momentanen Deformationsniveaus und Referenzniveaus erlauben, ebenso nach einem langen Zeitabschnitt und nach wiederholten Betriebsunterbrechungen.

7. Werkzeugmaschine mit einer netzartigen Messstruktur mit mehreren Verbundsensoren, wobei die netzartige Struktur Folgendes aufweist:
- ein System gerader, miteinander verbundener Stäbe (14), die monoaxial belastet sind, eine vernachlässigbare Steifigkeit aufweisen und angeordnet sind, um eine zweidimensionale netzartige Messstruktur (16) zu bilden, die als ein Einzelkörper an ihren Knotenpunkten an der Struktur der Arbeitsmaschine festgelegt ist;
- Lichtleitersensoren (9), die jedem Stab (14) der zweidimensionalen netzartigen Struktur (16) entlang seiner axialen Richtung zugehörig sind;
- Knotengelenke (13), die jeweils durch den Zusammenfluss mehrerer Stäbe (14) gebildet sind und jeweils, um überwacht zu werden, starr an der zugrundeliegenden Struktur festgelegt sind, der Werkzeugmaschine zugehörig sind und vorzugsweise eine erhebliche Größe aufweisen;
- eine Filtereinheit, die dazu ausgebildet ist, die Deformationen der Struktur der Arbeitsmaschine zu kompensieren.

8. Werkzeugmaschine gemäß Anspruch 7, **dadurch gekennzeichnet, dass** jeder Stab (14) mittels Befestigungsmuttern (11), die in den Knotenpunkten (13) der netzartigen Struktur angeordnet sind, vorgespannt ist.

9. Werkzeugmaschine gemäß den Ansprüchen 7 und 8, **dadurch gekennzeichnet, dass** die Stäbe (14), die in den Knotengelenken (13) zusammentreffen, im Wesentlichen gekrümmte Profile aufbieten, um den gekrümmten Konturen der Werkzeugmaschine, die bei der Ermittlung der Deformation zu überwachen ist, angepasst zu sein.

10. Werkzeugmaschine nach Anspruch 7, **dadurch gekennzeichnet, dass** die Verbunddeformationssensoren (9) als Sensoren mit Lichtleitern ausgebildet sind, die in mindestens ein Bragg-Gitter eingebunden sind, das vorteilhaft der Dotierung des kristallinen Germaniumelements oder Verbindungen desselben Germaniums ausgesetzt ist.

11. Werkzeugmaschine gemäß Anspruch 10, **dadurch gekennzeichnet, dass** die Lichtleiter, die in den Bragg-Gittern eingebunden sind, bei der Lagerung an den Lagerstäben (14) der netzartigen Messstruktur geringfügig vorgespannt sind.

12. Werkzeugmaschine nach einem oder mehreren der Ansprüche 7 bis 11, **gekennzeichnet durch** Aufbieten mindestens zweier Sensoren, die Lichtleiter aufweisen, die in die Bragg-Gitter eingebunden sind, die frei an den zwei Enden der Werkzeugmaschinenstruktur aufgenommen sind, um die Fehler, die aus den aus den Temperaturänderungen entstandenen Deformationen herrühren, zu überwachen und zu kompensieren.

13. Werkzeugmaschine nach einem oder mehreren der Ansprüche 7 bis 12, **gekennzeichnet durch** Aufbieten mindestens eines Systems von Stäben mit zweidimensionaler netzartiger Struktur für jede kartesische Fläche, die mit einer der drei kartesischen Achsen der Maschinenstruktur verbunden ist, um zur Ermittlung der strukturellen Deformationen überwacht zu werden, wobei die Stäbe den Verbundlichtleitersensoren (9) und den Knotengelenken (13) zugehörig sind, die **durch** den Zusammenfluss derselben Stäbe (14) gebildet sind und bei der Erkennung der Deformationen starr an der zugrundeliegenden Struktur festgelegt sind.

14. Werkzeugmaschine nach den Ansprüchen 7 bis 13, **dadurch gekennzeichnet, dass** sie als numerisch gesteuerte Fräs- und Bohrwerkzeugmaschine ausgebildet ist, die mit mindestens einer netzartigen Messstruktur ausgerüstet ist, die mehrere Stäbe (14) und mehrere Verbundlichtleitersensoren (9) aufweist.

## Revendications

1. Procédé de détermination d'une configuration de déformation dans une structure donnée, plus ou moins complexe, d'une machine operatrice à commande numérique, ***caractérisé par*** :
- l'acquisition de la déformation de la structure de la machine operatrice par détection de la déformation d'une structure réticulaire (16) de mesure formée par un nombre quelconque de tiges (14) reliées entre elles, qui sont droites et ont une rigidité négligeable, ladite structure réticulaire (16) de mesure étant maintenue par contrainte comme un corps unique au niveau de ses points nodaux à la structure de la machine operatrice;
- la mesure sensiblement en continu des déformations thermo-structurales des structures surveillées de la machine operatrice au moyen d'un système de capteurs (9) à fibres optiques, agissant comme vecteurs d'informations et qui sont couplés aux tiges (14) reliées entre elles pour former une structure réticulaire de mesure ;
- la détection des déformations des structures surveillées de la machine operatrice sous une fréquence d'exécution élevée ayant pour origine les capteurs (9) à fibres optiques, permettant de réaliser des mesures des déformations sur une échelle de temps compatible et comparable avec les fréquences de commande des phases d'exécution du processus de travail de l'outil dans des machines operatrice à commande numérique CNC ;
- la modélisation et l'élaboration de l'état global des déformations pour effectuer, instant par instant, avec une fréquence élevée, les corrections et les compensations dans une unité d'entraînement en corrigeant les points de positionnement des outils dans les processus de travail des machines operatrice à commande numérique ;
- l'intégration des signaux générés par le système des capteurs (9) à fibres optiques dans une unité de filtration apte à compenser les déformations sans provoquer d'instabilité pour la boucle d'asservissement fonctionnelle de contrôle numérique de la machine operatrice;
- la fourniture d'une mesure en temps réel de la position déformée de tout point de la structure surveillée complexe par interpolation des positions déformées des noeuds des capteurs (9) à fibres optiques qui coïncident avec les noeuds (13) des éléments reliés de la structure réticulaire de mesure ;
- la mesure des niveaux de déformation globale exempts de déviations sur une échelle de temps et compensés pour les effets des températures de service des structures surveillées de la machine operatrice.

2. Procédé de détermination de la déformation d'une structure de machine operatrice selon la revendication 1, ***caractérisé par*** l'acquisition de la déformation de la structure de la machine operatrice par interpolation des positions prises par les noeuds (13) après la déformation de la structure réticulaire de mesure s'affichant comme un jeu d'éléments, ou de tiges surveillées (14) disposées de manière à former une structure bidimensionnelle, dans lequel chaque tige (14) est munie d'un capteur (9) à fibres optiques le long de la direction axiale et les déformations longitudinales des tiges munies de capteurs sont utilisées pour reconstruire, par triangulations, le déplacement sur le plan des noeuds des capteurs qui sont fixés rigidement à la structure sous-jacente de la machine operatrice.

3. Procédé de détermination de la déformation d'une structure de machine operatrice selon les revendications 1 et 2, ***caractérisé par*** l'exhibition d'au moins deux structures réticulaires bidimensionnelles de mesure, chacune fixée rigidement avec ses propres charnières à noeuds à des plans différents (10) de la structure sous-jacente à surveiller afin de détecter les déformations sur l'échelle de temps.

4. Procédé de détermination de la déformation d'une structure de machine operatrice selon la revendication 3, ***caractérisé en ce que*** les structures réticulaires bidimensionnelles de mesure sont fixées rigidement avec leurs propres charnières (13) à noeuds à des plants cartésiens (10) sensiblement orthogonaux de la structure sous-jacente à surveiller afin de détecter les déformations sur l'échelle de temps.

5. Procédé de détermination de la déformation d'une structure de machine operatrice selon les revendications 1 et 2, ***caractérisé par*** l'exhibition des tiges (14) de la structure réticulaire de mesure équipées d'au moins un capteur de déformation (9) à fibres optiques comportant au moins un réseau de Bragg (FBG) pour permettre la détection et la mesure des déformations structurales se développant à la fois sur des temps longs, telle les déformations thermiques, et sur des temps plus courts, telles les déformations produites par des phénomènes dynamiques et des charges structurales.

6. Procédé de détermination de la déformation d'une structure de machine operatrice selon l'une ou plusieurs des revendications précédentes, ***caractérisé par*** la mesure par des capteurs (9) à fibres optiques ayant un réseau de Bragg - FBG - des valeurs de la déformation qui ne montrent aucune déviation dans les valeurs détectées, permettant une comparaison directe entre des niveaux de déformation instantanés et des niveaux de référence, ainsi qu'après une longue période de temps et après des suspensions d'utilisation répétées.

7. Machine operatrice comprenant une structure réticulaire de mesure ayant plusieurs capteurs composites, ladite structure réticulaire comprenant :
- un système de tiges droites (14) reliées entre elles, chargées mono-axialement, ayant une rigidité négligeable, et disposées de manière à former une structure réticulaire bi-dimensionnelle (16) de mesure qui est maintenue par contrainte comme un corps unique au niveau de ses points nodaux à la structure de la machine operatrice;
- des capteurs (9) à fibres optiques associés le long de la direction axiale de chaque tige (14) de ladite structure réticulaire bi-dimensionnelle (16) ;
- des charnières (13) à noeuds formées chacune par la confluence de plusieurs tiges (14) et chacune maintenue rigidement par contrainte à la structure sous-jacente à surveiller appartenant à la machine operatrice, de manière préférée de taille appropriée ;
- une unité de filtration apte à compenser les déformations de la structure de la machine operatrice.

8. Machine operatrice selon la revendication 7, ***caractérisée en ce que*** chaque tige (14) est pré-tendue au moyen d'écrous de fixation (11) placés dans les charnières (13) à noeuds de la structure réticulaire.

9. Machine operatrice selon les revendications 7 et 8, ***caractérisée en ce que*** les tiges (14) se rencontrant dans les charnières (13) à noeuds présentent un profil sensiblement curviligne pour s'adapter aux contours courbes de la structure de la machine operatrice à surveiller afin de détecter les déformations.

10. Machine operatrice selon la revendication 7, ***caractérisée en ce que*** les capteurs de déformation composites (9) sont des capteurs (9) à fibres optiques intégrées avec au moins un réseau de Bragg soumises de manière avantageuse au dopage de l'élément cristallin germanium, ou de composés du germanium.

11. Machine operatrice selon la revendication 10, ***caractérisée en ce que*** les fibres optiques intégrées à réseaux de Bragg sont légèrement pré-tendues dans l'ancrage sur les tiges de support (14) de la structure réticulaire de mesure.

12. Machine operatrice selon l'une quelconque des revendications 7 à 11, ***caractérisée en ce qu*'**elle comporte au moins deux capteurs à fibres optiques intégrées à réseaux de Bragg montés libres aux deux extrémités de la structure de la machine operatrice pour surveiller et compenser les erreurs dérivant des déformations provoquées par les changements de température.

13. Machine operatrice selon l'une quelconque des revendications 7 à 12, ***caractérisée en ce qu'***elle comporte, pour chaque plan cartésien concernant l'un des trois axes cartésiens de la structure de la machine operatrice à surveiller afin de détecter les déformations structurales, au moins un système de tiges ayant une structure réticulaire bi-dimensionnelle, lesdites tiges étant associées aux capteurs à fibres optiques composites (9) et aux charnières (13) à noeuds formées par la confluence de ces tiges (14) et maintenues de manière rigide par contrainte à la structure sous-jacente pour la détection des déformations.

14. Machine operatrice selon l'une quelconque des revendications 7 à 13, ***caractérisée en ce qu*'**il s'agit d'une machine operatrice à aléser et à fraiser à commande numérique équipée d'au moins une structure réticulaire de mesure avec plusieurs tiges (14) et plusieurs capteurs à fibres optiques composites (9).
